Europäisches Patentamt

European Patent Office

Office européen des brevets

(19)

(11) **EP 1 289 810 B1**

(12) **EUROPÄISCHE PATENTSCHRIFT**

(45) Veröffentlichungstag und Bekanntmachung des Hinweises auf die Patenterteilung:
**07.01.2004 Patentblatt 2004/02**

(51) Int Cl.⁷: **B60T 8/00**, B60T 13/66, B60T 17/22

(21) Anmeldenummer: **01933983.7**

(22) Anmeldetag: **17.05.2001**

(86) Internationale Anmeldenummer:
**PCT/EP2001/005641**

(87) Internationale Veröffentlichungsnummer:
**WO 2001/092075 (06.12.2001 Gazette 2001/49)**

(54) **VERFAHREN UND VORRICHTUNG ZUR BESTIMMUNG DES ANSPRECHDRUCKS VON FAHRZEUGBREMSEN**

METHOD AND DEVICE FOR DETERMINING THE RESPONSE PRESSURE OF MOTOR VEHICLE BRAKES

PROCEDE ET DISPOSITIF DESTINES A DETERMINER LA PRESSION DE REPONSE DE FREINS AUTOMOBILES

(84) Benannte Vertragsstaaten:
**AT BE CH CY DE DK ES FI FR GB GR IE IT LI LU MC NL PT SE TR**

(30) Priorität: **30.05.2000 DE 10026688**

(43) Veröffentlichungstag der Anmeldung:
**12.03.2003 Patentblatt 2003/11**

(73) Patentinhaber: **KNORR-BREMSE Systeme für Nutzfahrzeuge GmbH 80809 München (DE)**

(72) Erfinder: **FRANK, Peter H-1118 Budapest (HU)**

(56) Entgegenhaltungen:
**EP-A- 0 733 532        DE-A- 19 517 708
DE-A- 19 521 872        DE-A- 19 648 936
DE-C- 19 602 879**

EP 1 289 810 B1

**Beschreibung**

Die vorliegende Erfindung betrifft ein Verfahren zur Bestimmung des Ansprechdrucks von Fahrzeugbremsen gemäß dem Oberbegriff des Patentanspruches 1 und eine Vorrichtung gemäß dem Oberbegriff des Patentanspruches 8.

Ein derartiges Verfahren ist aus der EP 0 733 532 A2 bekannt.

Bei einer Fahrzeugbremsanlage muß zum Erzeugen einer Bremskraft ein gewisser Mindestbremsdruck überschritten werden, der als Ansprechdruck bezeichnet wird. Üblicherweise weist ein Fahrzeugbremssystem mehrere Bremsen auf, die unterschiedliche Ansprechdrücke haben können, was zu einem unerwünscht hohen Verschleiß an den zuerst ansprechenden Bremsen führt. Die Verschleißproblematik ist insbesondere dann von Bedeutung, wenn ein Zugfahrzeug mit unterschiedlichen Anhängern gekoppelt wird, da die Höhe des Ansprechdrucks einzelner Fahrzeuge von den individuellen Rückstellkräften und der mechanischen Reibung zwischen einzelnen Bremskomponenten abhängt. Die Ermittlung des Ansprechdrucks kann z.B. auf einem Rollenprüfstand erfolgen, was jedoch relativ umständlich ist.

Aus der eingangs erwähnten EP 0 733 532 A2 ist bereits ein Verfahren bekannt, bei dem der Ansprechdruck während der Fahrt ermittelt wird und zwar durch Auswerten der Fahrzeugbeschleunigung. Aus Raddrehzahlsignalen wird zunächst eine eventuell vorhandene Fahrzeugverzögerung ermittelt, die als "Grund-Fahrzeugverzögerung" bezeichnet wird und z. B. durch Windwiderstand, Reibungskräfte oder Hangneigung verursacht wird. Anschließend wird die zu überprüfende Bremse bzw. die zu überprüfende Gruppe von Bremsen mit einem Testdruck beaufschlagt und die sich dann einstellende Test-Fahrzeugverzögerung ermittelt. Wenn sich die Fahrzeugverzögerung gegenüber der Grund-Fahrzeugverzögerung nicht ändert, wird der Testdruck erhöht. Nimmt die Fahrzeugverzögerung zu und ist die Differenz zwischen der Test-Fahrzeugverzögerung und der Grund-Fahrzeugverzögerung größer als ein vorgegebener Toleranzwert, so wird der vorhandene Bremsdruck als Ansprechdruck der Bremse angesehen. Bei der Auswertung von Raddrehzahlsignalen sind in der Praxis nur relativ grobe "Verzögerungsstufen" von ca. 0,2 m/s$^2$ detektierbar. Folglich ist bei diesem Stand der Technik ein gewisser "Mindesttestdruck" erforderlich, um die detektierbare Verzögerungsänderung zu erreichen, was vom Fahrer als störendes "Rukken" wahrgenommen wird. Auch kann eine Fahrzeugverzögerung aufgrund Änderung der Motorleistung nicht von einer Fahrzeugverzögerung aufgrund des Testbremsdruckes unterschieden werden.

Aus der DE 196 02 879 C1 ist ein Verfahren zum Erfassen der Umkippgefahr eines Fahrzeuges bekannt, bei dem die Fahrzeugquerbeschleunigung ständig überwacht wird und bei Überschreiten eines vorgegebenen Grenzwertes eine Testbremsung mit geringer Bremskraft durchgeführt wird, wobei überprüft wird, ob an einzelnen Rädern oder Radgruppen das ABS (Antiblockiersystem) anspricht und an anderen Rädern nicht.

Die DE 196 48 936 A1 beschreibt ein Verfahren, das die Anlegedrücke der Bremsen mit einer statistischen Auswertung von Meßdaten - durch Regressionsanalyse - ermittelt. Die Messungen erfolgen während Betriebsbremsungen, was folglich zu langen Indentifizierungszeiten führt.

Aufgabe der Erfindung ist es, ein verbessertes Verfahren und eine verbesserte Vorrichtung zur Bestimmung des Ansprechdrucks von Fahrzeugbremsen zu schaffen.

Diese Aufgabe wird durch die Merkmale der Patentansprüche 1 und 8 gelöst. Vorteilhafte Ausgestaltungen und Weiterbildungen sind den Unteransprüchen zu entnehmen.

Der Erfindung liegt die Idee zugrunde, die zu untersuchenden Bremsen mit einem Testdruck zu beaufschlagen, wobei vor und nach der Erzeugung des Testdrucks ein Testdruckindikatorsignal erzeugt wird, das eine Linearkombination eines Beschleunigungssignals und eines Differenzgeschwindigkeitssignals ist. Stimmen die beiden Testdruckindikatorsignale innerhalb eines Toleranzbandes überein, was als "Nichtansprechen der Bremse" angesehen wird, so wird der Testdruck erhöht und ein neues Testdruckindikator-signal erzeugt. Stimmen die beiden Testdruckindikatorsignale nicht überein, so wird der vorhandene Bremsdruck als Ansprechdruck angesehen, wenn die Differenz zwischen den beiden Testdruckindikator-signalen einen vorgegebenen Grenzwert übersteigt.

Während beim Stand der Technik das Ansprechen der Bremse ausschließlich durch Auswerten der Fahrzeugverzögerung erkannt wird, geht in das bei der Erfindung verwendete Testdruckindikatorsignal zusätzlich zu dem Beschleunigungssignal ein Differenzgeschwindigkeitssignal ein, das auch als "Schlupfsignal" bezeichnet werden kann und das aus Raddrehzahlsignalen einer mit dem Testdruck beaufschlagten oder einer nicht mit Testdruck beaufschlagten Achse bzw. einem Rad und einer angetriebenen oder nicht angetriebenen Fahrzeugachse gebildet wird.

Da in das Testdruckindikatorsignal gemäß der Erfindung das Beschleunigungssignal und das Differenzgeschwindigkeitssignal eingeht, kann das Ansprechen der Bremse bereits bei geringeren Testdrücken erkannt werden. Ein weiterer Vorteil der Verwendung des Beschleunigungssignals und des Differenzgeschwindigkeits- bzw. Schlupfsignals ist, daß eine durch den Testdruck bedingte Änderung der Verzögerung von einer Verzögerungsänderung unterscheidbar ist, die auf eine Änderung der Motorkraft zurückzuführen ist, z.B. durch Gasgeben oder Zurückschalten in einen niedrigeren Gang. Die durch den Testdruck bedingte Änderung der Fahrzeugverzögerung (Rucken) wird ebenfalls verringert.

Nach einer vorteilhaften Weiterbildung der Erfindung ist vorgesehen, daß bei der Erzeugung des Testdrucks die Fahrzeugverzögerung durch Erhöhen des Motordrehmomentes annähernd konstant gehalten wird, was den Fahrkomfort weiter verbessert. Weiter kann z.B. eine "Kombination" einer erfindungsgemäßen Vorrichtung mit einer herkömmlichen "Tempomat-Regelung" vorgesehen sein, so daß die Fahrzeuggeschwindigkeit konstant gehalten wird. Auch in diesem Fall wird das Testdruckindikatorsignal ausreichend groß, da dessen Schlupfkomponente wegen des erhöhten Motordrehmomentes anwächst.

Im folgenden wird die Erfindung anhand eines Ausführungsbeispieles im Zusammenhang mit der Zeichnung näher erläutert. Es zeigen:

> Fig. 1 eine schematische Darstellung des Verfahrens gemäß der Erfindung; und

> Fig. 2 eine Bremsanlage zur Anwendung des Fahrens gemäß der Erfindung.

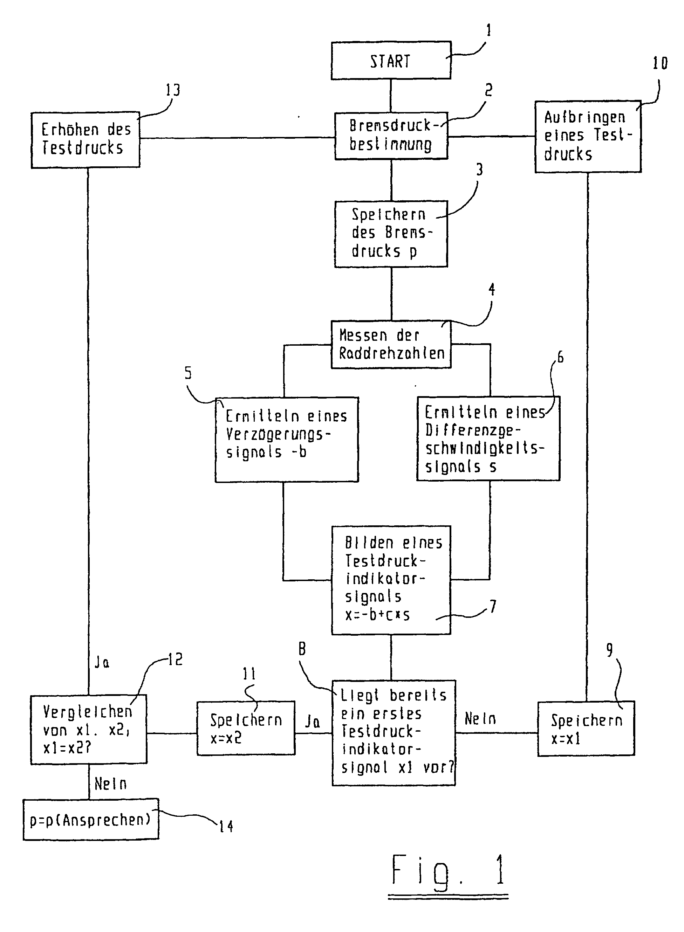

Fig. 1 zeigt schematisch den Verfahrensablauf zur Bestimmung eines Bremsansprechdrucks. Unter dem Bremsansprechdruck ist hier der Ansprechdruck einer einzelnen Radbremse oder der Ansprechdruck einer Gruppe von Bremsen zu verstehen, d.h. der Ansprechdruck von Bremsen einer Achse oder einer Achsgruppe.

Nach einem Initialisierungsschritt 1 wird in einem Schritt 2 der Bremsdruck an der bzw. den zu untersuchenden Bremsen bestimmt. Der Bremsdruck p kann z.B. durch Drucksensoren gemessen werden oder in bekannter Weise rechnerisch durch Auswerten der Öffnungs- und Schließzeiten von Bremsventilen (ABS-Ventilen) ermittelt werden. Der ermittelte Bremsdruck p wird in Schritt 3 gespeichert.

In Schritt 4 werden Raddrehzahlen einzelner Fahrzeugräder gemessen, z.B. durch Raddrehzahlsensoren. Aus den Raddrehzahlsignalen wird durch Differenzieren in Schritt 5 ein Beschleunigungssignal -b gebildet. In Schritt 6 wird aus einzelnen Raddrehzahlsignalen ein Differenzgeschwindigkeitssignal s gebildet, worauf noch ausführlicher eingegangen wird.

In Schritt 7 wird aus dem Beschleunigungssignal -b und dem Differenzgeschwindigkeitssignal s ein Testdruckindikatorsignal x gebildet. Das Testdruckindikatorsignal x ist eine Linearkombination des Beschleunigungssignals -b und des Differenzgeschwindigkeitssignals s, was z.B. durch die Gleichung

$$x = s + c \cdot -b$$

beschrieben werden kann, wobei c ein konstanter Faktor ist, der eine Gewichtung des Beschleunigungssignales -b im Verhältnis zum Differenzgeschwindigkeitssignal (s) gestattet.

In Schritt 8 wird geprüft, ob bereits ein erstes Testdruckindikatorsignal x1 ermittelt wurde. Wenn noch kein Testdruckindikatorsignal x1 ermittelt wurde, wird das soeben ermittelte Testdruckindikatorsignal x als Signal x1 in Schritt 9 gespeichert. Anschließend wird in Schritt 10 ein Testdruck erzeugt, der die zu untersuchende Bremse bzw. die zu untersuchende Gruppe von Bremsen beaufschlagt.

Nach der Testdruckerzeugung werden erneut die Schritte 2-8 durchlaufen, d.h. es wird der Bremsdruck ermittelt und gespeichert, und ein neues Testdruckindikatorsignal x erzeugt.

Bei der Überprüfung in Schritt 8 wird nun festgestellt, daß bereits ein erstes Testdruckindikatorsignal x1 vorliegt. Das nach der Testdruckerzeugung gebildete Testdruckindikatorsignal x wird somit in Schritt 11 als Testdruckindikatorsignal x2 gespeichert.

Anschließend wird in Schritt 12 überprüft, ob die beiden Testdruckindikatorsignale x1, x2 innerhalb eines Toleranzbandes übereinstimmen. Stimmen die Testdruckindikatorsignale x1 und x2 überein, so wird davon ausgegangen, daß der erzeugte Testdruck zu gering ist und die zu überprüfenden Bremsen noch nicht angesprochen haben.

Bei der Testdruckerhöhung ist wichtig, daß die Zeitspanne zwischen den Signalen x1 und x2 nicht zu lange ist, weil Einflußgrößen, wie z.B. Hangneigung, Luftwiderstand etc., die das Beschleunigungssignal beeinflussen, sich inzwischen ändern können.

In diesem Fall wird in Schritt 13 der zuvor verwendete Testdruck entlassen und nach einer gewissen Wartepause ein um eine gewisse Stufe erhöhter, neuer Testdruck ausgegeben. Danach werden die Schritte 2-8 erneut durchlaufen. In Schritt 11 wird dann das neu erhaltene Testdruckindikatorsignal x2 gespeichert.

Wenn in Schritt 12 festgestellt wird, daß sich die beiden Testdruckindikatorsignale x1 und x2 um mehr als den Wert des Toleranzbandes unterscheiden, so wird der nach der Testdruckerhöhung in Schritt 3 gespeicherte Bremsdruck p in Schritt 12 als Ansprechdruck p=p(Ansprechen) ausgegeben.

Im folgenden wird anhand von zwei Beispielen auf die in den Schritten 5 und 6 durchgeführte Ermittlung des Beschleunigungssignals -b und des Differenzgeschwindigkeitssignals s eingegangen.

> a) Es wird von einem Fahrzeug mit Hinterachsantrieb ausgegangen, bei dem der Ansprechdruck an den Bremsen der Vorderachse bestimmt werden soll (4x2-Fahrzeug mit 4 Rädern, von denen 2 angetrieben sind). Das Beschleunigungssignal -b kann z.B. durch Differenzieren der Raddrehzahlsignale der Vorderräder, d.h. nicht angetriebener Räder, bestimmt werden:

$$-b = \frac{dv_{Vorderachse}}{dt}$$

Das Differenzgeschwindigkeitssignal kann z.B. als dimensionslose Größe definiert sein, die von Radgeschwindigkeiten an der nicht angetriebenen Vorderachse und an der angetriebenen Hinterachse abhängt:

$$s = \frac{v_{Vorderachse} - v_{Hinterachse}}{v_{Hinterachse}}$$

Wenn der Testdruck an den Vorderradbremsen eingesteuert wird, nimmt das Beschleunigungssignal -b betragsmäßig zu und das Differenzgeschwindigkeitssignal s wird kleiner. Aus den beiden Signalen -b und s wird anschließend das Testdruckindikatorsignal x = -b + c • s gebildet, wobei c ein Faktor zur Dimensionsangleichung von -b und s ist. b) Als weiteres Beispiel wird die Bestimmung des Ansprechdrucks der Bremsen eines Anhängerfahrzeuges betrachtet. Hierzu wird den zu untersuchenden Anhängerbremsen ein Testdruck eingesteuert, während die anderen Bremsen nicht mit Druck beaufschlagt werden. Auch in diesem Fall können das Beschleunigungssignal -b und das Differenzgeschwindigkeitssignal s aus Raddrehzahlsignalen des Zugfahrzeuges abgeleitet werden. Das Beschleunigungssignal -b kann wie oben angegeben ermittelt werden.

Das Differenzgeschwindigkeitssignal kann alternativ zu oben durch folgende am Zugfahrzeug gemessene Signale definiert sein:

$$s = \frac{v_{Vorderachse} - v_{Hinterachse}}{v_{Vorderachse}}$$

In diesem Fall wird über den pneumatischen Kupplungskopf dem Bremssystem des Anhängers ein Testdruck zugeführt, der zu einer Verringerung des Beschleunigungssignals -b führt, ohne daß das Differenzsignal s gestört wird. Eine möglicherweise auftretende Änderung der Traktionskraft führt zu einer entgegengesetzten Änderung des Differenzgeschwindigkeitssignals s und des Beschleunigungssignals -b. Durch eine geeignete Wahl des Faktors c kann verhindert werden, daß diese Gegeneffekte im Testdruckindikatorsignal x erscheinen.

Wenn das Anhängerfahrzeug mit Raddrehzahlsensoren ausgestattet ist, können alternativ zu den obigen Beispielen a) und b) auch Raddrehzahlsignale des Anhängers ausgewertet werden.

Das Verfahren zur Ermittlung des Bremsansprechdrucks kann um eine Regelung des Motordrehmomentes des Zugfahrzeuges ergänzt sein. Zur Vermeidung eines "Verzögerungsrucks" beim Aufbringen des Testbremsdrucks kann - ähnlich einer "Tempomat-Regelung" - vorgesehen sein, daß eine Motorsteuerung das Motordrehmoment so erhöht, daß sich die Fahrzeugverzögerung nicht bzw. für den Fahrer nicht spürbar verändert. Der Testbremsdruck kann gemäß einer vorgegebenen Zeitfunktion, z.B. einer Rampenfunktion aufgebaut werden. Da in das Testdruckindikatorsignal x sowohl die Fahrzeugverzögerung -b als auch das Differenzgeschwindigkeitssignal s eingeht, kann bei konstant (z.B. auf Null) gehaltener Fahrzeugverzögerung -b das Ansprechen der Bremse auch an der Veränderung des Differenzgeschwindigkeitssignals s erkannt werden.

Der zur Bestimmung des Ansprechdrucks der Bremsen erforderliche Testbremsdruck kann gemäß einer vorgegebenen Zeitfunktion aufgebaut werden. Der Testdruckaufbau wird dann vom Fahrer nicht als störend empfunden und gleichzeitig wird eine Feinsteuerung der Fahrzeugverzögerung ermöglicht. Wenn der Testdruck ein vorgegebenes Druckniveau übersteigt, kann vorgesehen sein, daß das Motordrehmoment erhöht wird, um eine weitere Verzögerung des Fahrzeuges zu verhindern. Die Änderung des Testdruckindikatorsignals x hängt dann nur noch von der Änderung des Differenzgeschwindigkeitssignals s ab.

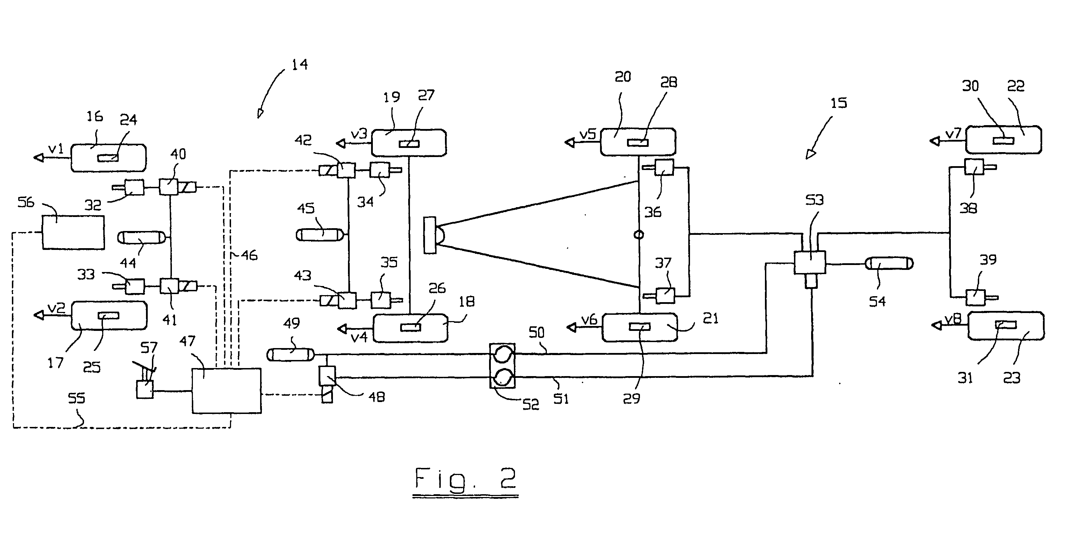

Fig. 2 zeigt in schematischer Darstellung das Bremssystem eines Zugfahrzeuges 14 und eines Anhängerfahrzeuges 15. Das Zugfahrzeug 14 weist Vorderräder 16, 17 und Hinterräder 18, 19 auf. Das Anhängerfahrzeug 15 weist ebenfalls Vorderräder 20, 21 und Hinterräder 22, 23 auf. Jedem der Räder 16-23 ist ein Raddrehzahlsensor 24-31 sowie ein Bremszylinder 32-39 zugeordnet. Den Bremszylindern 32-35 des Zugfahrzeuges 14 ist jeweils ein ABS-Ventil 40-43 vorgeschaltet, wobei die Bremszylinder 32, 33 der Vorderachse von einem ersten Vorratsdruckbehälter 44 und die Bremszylinder 34, 35 der Hinterachse durch einen zweiten Vorratsdruckbehälter 45 mit Druckluft versorgt werden. Die ABS-Ventile 40-43 sind über elektrische Leitungen mit einer zentralen Steuereinheit 47 verbunden. Die Raddrehzahlsensoren 24-31 des Zugfahrzeuges 14 und des Anhängerfahrzeuges 15 sind ebenfalls über elektrische Leitungen (nicht dargestellt) mit der Steuereinheit 47 verbunden.

Zur Steuerung des Bremssystems des Anhängerfahrzeuges ist im Zugfahrzeug 14 ein durch die Steuereinheit 47 angesteuertes Anhängersteuerventil 48 vorgesehen, das von einem Vorratsdruckbehälter 49 mit Vorratsdruck versorgt wird. Vom Vorratsdruckbehälter 49 und vom Anhängersteuerventil 48 führen pneumatische Leitungen 50, 51 über eine pneumatische Kupplung 52 zu einem auf dem Anhängerfahrzeug vorgesehenen Anhängerbremsventil 53. Das Anhängerbremsventil 53 wird von einem Vorratsdruckbehälter 54 mit Druckmittel versorgt und beaufschlagt die Bremszylinder 36, 37 der Vorderachse bzw. die Bremszylinder 38, 39 der Hinterachse des Anhängerfahrzeuges 15. Die Steuereinheit 47 ist ferner über eine elektrische Leitung 55 mit einer elektronischen Motorsteuerung 56 verbunden. Schließlich ist ein Fußbremsventil 57 vorgesehen, über das der Fahrer der Steuereinheit 47 ein Bremsanforderungssignal zuführt.

Soll der Ansprechdruck der Bremszylinder 32, 33 der Vorderachse des Zugfahrzeuges 14 bestimmt werden, so werden vor und nach der Erzeugung des Bremsdrucks das Beschleunigungssignal -b bzw. das Differenzgeschwindigkeitssignal s z.B. durch folgende Gleichungen ermittelt:

$$s = \frac{v_{Vorderachse} - v_{Hinterachse}}{v_{Hinterachse}}$$

$$-b = \frac{dv_{Vorderachse}}{dt}$$

s und -b werden vor und nach der Erzeugung des Testdrucksignals ermittelt, und es werden die entsprechenden Testdruckindikatorsignale x1, x2 gebildet und miteinander verglichen. Entsprechend dem in Fig. 1 beschriebenen Verfahren ermittelt die Steuereinheit 47 den Ansprechdruck der Bremszylinder 32, 33.

In analoger Weise kann der Ansprechdruck der anderen Bremszylinder 34-39 ermittelt werden.

Bezugszeichenliste

| | |
|---|---|
| 1-13 | Verfahrensschritte |
| 14 | Zugfahrzeug |
| 15 | Anhängerfahrzeug |
| 16, 17 | Vorderräder |
| 18, 19 | Hinterräder |
| 20,21 | Vorderräder |
| 22, 23 | Hinterräder |
| 24-31 | Raddrehzahlsensoren |
| 32-39 | Bremszylinder |
| 40-43 | ABS-Ventil |
| 44, 45 | Vorratsdruckbehälter |
| 46 | elektrische Leitung |
| 47 | Steuereinheit |
| 48 | Anhängersteuerventil |
| 49 | Vorratsdruckbehälter |
| 50, 51 | pneumatische Leitung |
| 52 | pneumatische Kupplung |
| 53 | Anhängerbremsventil |
| 54 | Vorratsdruckbehälter |
| 55 | elektrische Leitung |
| 56 | Motorsteuerung |
| 57 | Fußbremsventil |

Patentansprüche

1. Verfahren zum Bestimmen des Ansprechdrucks von Bremsen eines Fahrzeuges, insbesondere einnes Straßenfahrzeuges, mit folgenden Schritten:

   a) Beaufschlagen der zu untersuchenden Bremsen mit einem Testdruck (p), wobei mit und ohne Testdruck
   b) an mindestens zwei Achsen des Fahrzeuges Raddrehzahlsignale gemessen werden und
   c) aus gemessenen Raddrehzahlsignalen ein Beschleunigungssignal (-b) ermittelt wird,
   d) nach dem Aufbringen des Testdrucks der Bremsdruck an der bzw. den zu untersuchenden Bremsen bestimmt wird,
   **dadurch gekennzeichnet, daß**
   e) jeweils für einen Fahrzustand mit und ohne dem Aufbringen des Testsignals ein Differenzgeschwindigkeitssignal (s) gebildet wird, das eine Funktion einer Differenz aus Raddrehzahlsignalen (v1-v8) einer angetriebenen und einer nicht angetriebenen Fahrzeugachse bzw. eines angetriebenen und eines nicht-angetriebenen Rades ist,
   f) jeweils ein Testdruckindikatorsignal (x, x1, x2) gebildet wird, das eine Linearkombination des Beschleunigungssignals (-b) und des Differenzgeschwindigkeitssignals (s) ist,
   g) die beiden Testdruckindikatorsignale (x1, x2) verglichen werden, wobei die Schritte a) bis f) mit einem erhöhten Testdruck (p) wiederholt werden, wenn die Testdruckindikatorsignale (x1, x2) innerhalb eines Toleranzbandes übereinstimmen und bei Nichtübereinstimmung der aufgebrachte Testdruck (p) als Ansprechdruck ausgegeben wird.

2. Verfahren nach Anspruch 1, **dadurch gekennzeichnet,**
   **daß** das Beschleunigungssignal (-b) aus Raddrehzahlsignalen (v1, v2; v5-v8) einer nicht angetriebenen Fahrzeugachse gebildet wird.

3. Verfahren nach einem der Ansprüche 1 oder 2, **dadurch gekennzeichnet,**
   **daß** das Differenzgeschwindigkeitssignal (s) eine Funktion des Verhältnisses ((v1-v3)/v1; (v1-v3)/v3) der Differenz (v1-v3) mindestens zweier Radumdrehungsgeschwindigkeiten und einer der beiden Radumdrehungsgeschwindigkeiten (v1, v3) ist.

4. Verfahren nach einem der Ansprüche 1, 2 oder 3, **dadurch gekennzeichnet, daß** das Beschleunigungssignal (-b) durch zeitliche Ableitung der Raddrehzahlsignale (v1-v8) eines zu untersuchenden Rades (16-23) gebildet wird.

5. Verfahren nach einem der Ansprüche 1 bis 4, **dadurch gekennzeichnet,**
   **daß** das Testdruckindikatorsignal (x) die Linearkombination x = s + c • -b ist, wobei s das Differenzgeschwindigkeitssignal, -b das Beschleunigungssignal und c ein konstanter Faktor ist.

6. Verfahren nach einem der Ansprüche 1 bis 5, **dadurch gekennzeichnet,**
**daß** zur Bestimmung des Ansprechdrucks der Bremsen (36-39) eines an ein Zugfahrzeug (14) angehängten Anhängerfahrzeuges (15) ausschließlich Raddrehzahlsignale (v1-v4) des Zugfahrzeuges verwendet werden.

7. Verfahren nach einem der Ansprüche 1 bis 6, **dadurch gekennzeichnet,**
**daß** bei Einsteuern des Testdrucks das Motordrehmoment erhöht wird.

8. Vorrichtung zur Bestimmung des Anspruchdrucks und Bremsen eines Fahrzeuges, insbesondere eines Straßenfahrzeuges, mit:

a) Mitteln zur Beaufschlagung von Bremszylindern mit Testdruck;
b) Raddrehzahlsensoren zur Erzeugung von Raddrehzahlsignalen an mindestens zwei Achsen des Fahrzeuges;
c) Mitteln zur Bestimmung der Bremsdrücke an den zu untersuchenden Bremsen und einem Mittel (47) zur Ermittlung eines Beschleunigungssignals (a) aus den Raddrehzahlsignalen,
**dadurch gekennzeichnet, daß**
d) eine elektronische Steuerung (47) vorgesehen ist, die vor und nach Aufbringen des Testdrucks ein Differenzgeschwindigkeitssignal (s) erzeugt, das eine Funktion einer Differenz (v1 - v3) aus Raddrehzahlsignalen (v1-v8) einer angetriebenen und einer nicht angetriebenen Fahrzeugachse bzw. eines angetriebenen und eines nicht-angetriebenen Rades ist, wobei die elektronische Steuerung (47) für einen Fahrzustand vor und nach dem Aufbringen des Testdrucks ein Testdruckindikatorsignal (x) erzeugt, das eine Linearkombination des Beschleunigungssignals (a) und des Differenzgeschwindigkeitssignals (s) ist und die beiden Testdruckindikatorsignale (x1, x2) vergleicht,

wobei Druckerhöhungsmittel (40-43, 47, 48, 53) vorgesehen sind, die den Testdruck erhöhen, wenn die Testdruckindikatorsignale (x1, x2) innerhalb eines Toleranzbandes übereinstimmen und bei Nichtübereinstimmung der aufgebrachte Testdruck (p) als Ansprechdruck ausgegeben wird.

## Claims

1. Method of determining the response pressure of the brakes of a vehicle, particularly a road vehicle, comprising the following steps:

a) applying a test pressure (P) to the brakes to be analysed, whilst, with and without a test pressure,
b) wheel speed signals are measured on at least two axles of the vehicle, and
c) an acceleration signal (-b) is determined by derivation from the measured wheel speed signals,
d) after application of the test pressure, determining the brake pressure on the brake or brakes, respectively, which is/are to be analysed,
**characterised in that**
e) for one driving condition, with and without the application of the test signal, a differential speed signal (s) is generated that is a function of a difference between the wheel speed signals (v1 - v8) of a driven and a non-driven vehicle axle or of a driven and a non-driven wheel, respectively,
f) a respective test pressure indicator signal (x, x1, x2) is formed that is a linear combination of said acceleration signal (-b) and of said differential speed signal (s),
g) said two test pressure indicator signals (x1, x2) are compared, with the steps a) to f) being repeated with an increased test pressure (p) when said test pressure indicator signals (x1, x2) are congruent with each other within a tolerance range, and with output of the applied test pressure (p) as response pressure in the case of non-congruence.

2. Method according to Claim 1, **characterised in that** said acceleration signal (-b) is generated by derivation from wheel speed signals (v1, v2; v5 - v8) of a non-driven vehicle axle.

3. Method according to any of the Claims 1 or 2, **characterised in that** said differential speed signal (s) is a function of the ratio ((v1 - v3)/v1; (v1 - v3/v3)) of the difference (v1 - v3) of at least two wheel speeds and one of said two wheel speeds (v1, v3).

4. Method according to any of the Claims 1, 2 or 3, **characterised in that** said acceleration signal (-b) is generated by deriving said wheel speed signals (v1 - v8) versus time of a wheel to be analysed (16 - 23).

5. Method according to any of the Claims 1 to 4, **characterised in that** said test pressure indicator signal (x) is the linear combination x = s + c · -b, with s representing said differential speed signal, -b indicating said acceleration signal and c being a constant factor.

6. Method according to any of the Claims 1 to 5, **characterised in that** wheel speed signals (v1 - v4) of a tractor vehicle (14) exclusively are used for determining the response pressure of the brakes (36 - 39) of a trailer vehicle (15) coupled to said tractor vehicle.

7. Method according to any of the Claims 1 to 6, **characterised in that** the engine torque is increased when said test pressure is controlled.

8. Device for determining the response pressure of the brakes of a vehicle, particularly a road vehicle, comprising:

   a) means for applying a test pressure on brake cylinders;
   b) wheel speed sensors for generating wheel speed signals on at least two axles of the vehicle;
   c) means for determining the brake pressures on the brakes to be analysed and a means (47) for determining an acceleration signal (a) from said wheel speed signals,
   **characterised in that**
   d) an electronic controller (47) is provided that generates a differential speed signal (s) before and after the application of said test pressure, which signal is a function of a difference (v1 - v3) between the wheel speed signals (v1 - v8) of a driven and a non-driven vehicle axle or of a driven and a non-driven wheel, with said electronic controller (47) generating a test pressure indicator signal (x) for a driving condition before and after application of said test pressure, which signal is a linear combination of said acceleration signal (a) and said differential speed signal (s) and compares said two test pressure indicator signals (x1, x2),

   with pressure increasing means (40 - 43, 47, 48, 53) being provided that increase the test pressure when said test pressure indicator signals (x1, x2) are congruent with each other within a tolerance range, and with said test pressure (p) being output as response pressure in the event of non-congruence.

**Revendications**

1. Procédé à déterminer la pression de réponse des freins d'un véhicule, en particulier d'un véhicule routier, comprenant les opérations suivantes:

   a) appliquer une pression témoin (P) aux freins à analyser, pendant qu'avec et sans une pression témoin
   b) des signaux de tours de roue sont mesurés à au moins deux arbres du véhicule, et
   c) déterminer un signal d'accélération (-b) en le dérivant des signaux mesurés de tours de roue,
   d) suivant l'application de la pression témoin, établir la pression de freinage au frein ou respectivement aux freins à analyser,
   **caractérisé en ce**
   e) que pour un état de marche, avec et sans l'application du signal témoin, un signal différentiel de vitesse (s) est engendré, qui constitue une fonction d'une différence entre les signaux de tours de roue (v1 - v8) d'un arbre entraîné ou d'un arbre non entraîné ou respectivement d'une roue entraînée ou d'une roue non entraînée,
   f) qu'un signal indicateur respectif de la pression témoin (x, x1, x2) est formé, qui constitue une combinaison linéaire dudit signal d'accélération (-b) et dudit signal différentiel de vitesse (s),
   g) que lesdits deux signaux indicateurs de la pression témoin (x1, x2) sont comparés, à répétition des opérations a) à f) à une pression témoin (p) augmentée, quand lesdits signaux indicateurs de la pression témoin (x1, x2) se trouvent en congruence l'un avec l'autre au-dedans d'une bande de tolérance, en sortant la pression témoin (p) appliquée en tant que pression de réponse en cas de non-congruence.

2. Procédé selon la revendication 1, **caractérisé en ce que** ledit signal d'accélération (-b) est engendré en le dérivant des signaux de tours de roue (v1, v2; v5 - v8) d'un arbre non entraîné du véhicule.

3. Procédé selon une quelconque des revendications 1 ou 2, **caractérisé en ce que** ledit signal différentiel de vitesse (s) constitue une fonction du rapport ((v1 - v3)/v1; (v1 - v3/v3)) de la différence (v1 - v3) entre au moins deux nombres de tours de roue et l'un desdits deux nombres de tours de roue (v1, v3).

4. Procédé selon une quelconque des revendications 1, 2 ou 3, **caractérisé en ce que** ledit signal d'accélération (-b) est engendré en le dérivant desdits signaux de tours de roue (v1 - v8) en fonction du temps d'une roue à analyser (16 - 23).

5. Procédé selon une quelconque des revendications 1 à 4, **caractérisé en ce que** ledit signal indicateur de la pression témoin (x) est la combinaison linéaire x = s + c · -b, à s représentant ledit signal différentiel de vitesse, -b indiquant ledit signal d'accélération et c étant un facteur constant.

6. Procédé selon une quelconque des revendications 1 à 5, **caractérisé en ce que** des signaux de tours de roue (v1 - v4) d'un véhicule tracteur (14) seulement sont utilisés pour la détermination de la pression de réponse des freins (36 - 39) d'une remorque (15) accouplée audit véhicule tracteur.

7. Procédé selon une quelconque des revendications 1 à 6, **caractérisé en ce que** le couple de rotation du moteur est augmenté, quand la pression témoin est ajustée.

8. Dispositif à déterminer la pression de réponse des freins d'un véhicule, en particulier d'un véhicule routier, comprenant:

   a) un moyen à appliquer une pression témoin aux cylindres de freinage;
   b) des détecteurs du nombre de tours de roue des roues pour la formation des signaux de tours de roue à au moins deux arbres du véhicule;
   c) un moyen à déterminer les pressions de freinage aux freins à analyser, et un moyen (47) à établir un signal d'accélération (a) en le dérivant desdits signaux de tours de roue, caractérisé en ce
   d) qu'une unité électronique de commande (47) est disposée, qui engendre un signal différentiel de vitesse (s) avant et après l'application de ladite pression témoin, ce signal étant une fonction d'une différence (v1 - v3) entre les signaux de tours de roue (v1 - v8) d'un arbre entraîné ou d'un arbre non entraîné ou d'une roue entraînée ou d'une roue non entraînée, cette unité électronique de commande (47) engendrant un signal indicateur de la pression témoin (x) pour un état de marche avant et après l'application de ladite pression témoin, ce signal étant une combinaison linéaire dudit signal d'accélération (a) et ledit signal différentiel de vitesse (s), en comparant lesdits deux signaux indicateurs de la pression témoin (x1, x2), à un moyen à augmenter la pression (40 - 43, 47, 48, 53), qui est disposé pour l'augmentation de la pression témoin, quand lesdits signaux indicateurs de la pression témoin (x1, x2) se trouvent en congruence l'un avec l'autre au-dedans d'une bande de tolérance, en sortant ladite pression témoin (p) en tant que pression de réponse au cas de non-congruence.

START  1

Erhöhen des
Testdrucks  13

Bremsdruckbestinnung  2

Aufbringen
eines Testdrucks  10

Speichern
des Bremsdrucks p  3

Messen der
Raddrehzahlen  4

Ermitteln eines
Verzögerungssignals -b  5

Ermitteln eines
Differenzgeschwindigkeitssignals s  6

Bilden eines
Testdruckindikatorsignals
$x=-b+c*s$  7

Ja

Vergleichen
von x1. x2,
x1=x2?  12

Speichern
x=x2  11

Ja

B

Liegt bereits
ein erstes
Testdruckindikatorsignal x1 vor?

Nein

Speichern
x=x1  9

Nein

p=p(Ansprechen)  14

Fig. 1

Fig. 2

EP 1 289 810 B1

10